# EUROPÄISCHE PATENTANMELDUNG

(11) **EP 1 990 538 A2**
(43) Veröffentlichungstag der Anmeldung: **12.11.2008**
(21) Anmeldenummer: 08015451.1
(22) Anmeldetag: 09.03.2006
(51) Int. Cl.: F03D 7/02

(54) **Vorrichtung zum Abbremsen eines Rotors einer Windkraftanlage**

(30) Priorität: 18.03.2005 AT 4682005
(62) Teilanmeldung aus: 06704743.1
(71) Anmelder: Windtec Consulting GmbH, 9020 Klagenfurt (AT)
(72) Erfinder: Hehenberger, Gerald, Dipl.-Ing., 9020 Klagenfurt (AT)
(74) Vertreter: Hehenberger, Reinhard

(57) **Zusammenfassung**

Bei einer Vorrichtung zum Abbremsen eines Rotors einer Windkraftanlage mit am Rotor drehbar gelagerten Rotorblättern (3), mit elektrischen Einrichtungen in der Rotornabe (2), wie einem Antrieb (4, 5) zum Verdrehen der Rotorblätter (3), wird bei Ausfall der Leistungsversorgung der elektrischen Einrichtungen (4, 5) eine Rotorbremse (11) aktiviert, wobei die Rotorblätter (3) auf Grund des Bremsmomentes der Rotorbremse (11) durch ihre Massenträgheit in die Segelstellung gedreht werden. Die Notstromversorgung (10) der in der Rotornabe (2) angeordneten elektrischen Einrichtungen (4, 5) ist außerhalb der Rotornabe (2), z.B. in einer Gondel (1) oder an einem Mast der Windkraftanlage, angeordnet und über eine elektrische Drehverbindung, z. B. einen Schleifring (8), mit den elektrischen Einrichtungen (4, 5) verbunden.

## Beschreibung

Die Erfindung betrifft eine Vorrichtung zum Verstellen von an einer Rotornabe einer Windkraftanlage drehbar gelagerten Rotorblättern, mit elektrischen Einrichtungen in der Rotornabe, wie einem Antrieb zum Verdrehen der Rotorblätter, mit einer mit den Rotorblättern verbundenen Sperre, die bei Ausfall der Leistungsversorgung des Antriebes oder des Antriebes selbst aktivierbar ist, und welche im aktivierten Zustand ein Verdrehen der Rotorblätter in die Betriebsstellung verhindert, mit einer Rotorbremse und mit einer Notstromversorgung.

Eine derartige Vorrichtung ist aus der WO 99/23384 A1 bekannt. Bei dieser Vorrichtung ist zum Abbremsen der Anlage eine Sperre an der Rotorblattverstellung vorgesehen, die bei Ausfall der Leistungsversorgung aktiviert wird, wodurch sich die Rotorblätter nur mehr in die Segelstellung drehen können und in dieser gehalten werden bis die Anlage zum Stillstand gekommen und die Leistungsversorgung wieder hergestellt ist. Wenngleich diese Vorrichtung ein sicheres Abbremsen der Anlage bei einem Ausfall der Leistungsversorgung gewährleistet, stellt es einen Nachteil dar, dass für ein zuverlässiges Funktionieren dieser Vorrichtung eine relativ große Pfeilung, d.h. ein Winkel zwischen der Längsachse des Rotorblattes und dessen Drehachse, erforderlich ist, wenn auch in ungünstigsten Fällen die Rotorblätter ohne Antrieb, der wiederum eine Notstromversorgung benötigen würde, in die Segelstellung gedreht werden sollen. Eine große Pfeilung verursacht nämlich auch große Lasten im Normalbetrieb, was den Einsatz größerer Verstellantriebe für die Rotorblätter erfordert. Dies führt in weiterer Folge zu höheren Installationskosten und einem höheren Energieverbrauch und verschlechtert die Dynamik der Antriebe durch höhere Massenträgheit der Antriebe. Zusammenfassend tritt daher bei der Vorrichtung gemäß der WO 99/23384 A1 entweder der Nachteil höherer Installations- und Betriebskosten durch eine große Pfeilung oder der Notwendigkeit von Batterien in der Nabe zum Unterstützen des Zurückdrehens der Rotorblätter in die Segelstellung durch die Rotorblattantriebe auf.

In der EP 1 128 064 A ist eine Vorrichtung zum Verstellen von an einer Rotornabe einer Windkraftanlage drehbar gelagerten Rotorblättern mit Antrieben zum Verdrehen der Rotorblätter und mit einer Notstromversorgung bekannt. Zur Notstromversorgung der Antriebe ist wenigstens ein an der Rotorwelle angeordneter Permanentmagnet-Generator vorgesehen.

Der Erfindung liegt daher die Aufgabe zu Grunde eine Vorrichtung der eingangs genannten Art zur Verfügung zu stellen, bei der das Abbremsen des Rotors auch dann zuverlässig funktioniert, wenn keine Pfeilung oder nur eine geringe Pfeilung vorhanden und keine eigene Notstromversorgung für jeden Antrieb jedes Rotorblattes vorgesehen sind.

Gelöst wird dies Aufgabe mit der Vorrichtung mit den Merkmalen des Anspruches 1.

Die Erfindung verwendet die bei Windkraftanlagen an sich immer vorhandene Rotorbremse, die jedoch nach den einschlägigen Vorschriften nur als Festhaltebremse bei der Wartung der Windkraftanlage oder als Notbremse bei Ausfall einer Anlagenkomponente verwendet wird, in Verbindung mit der Sperre zum Verdrehen der Rotorblätter in die Segelstellung. Die Erfindung macht sich dabei zu Nutze, dass durch den Einsatz der Rotorbremse ein Drehmoment auf die Rotorblätter wirkt, welches diese in die Segelstellung dreht. Gleichzeitig wirken auf die Rotorblätter die Schwerkraft und Windkräfte, welche ein Verdrehen der Rotorblätter in die Segelstellung unterstützen. Durch die Kombination all dieser Merkmale kann ein äußerst rasches und sicheres Verdrehen der Rotorblätter in die Segelstellung bewirkt werden, ohne dass eine große Pfeilung oder eine Unterstützung durch die Rotorblattantriebe mit einer dadurch notwendigen, redundanten Notstromversorgung in Form von Batterien erforderlich ist. Die Versorgung der in der Nabe angeordneten elektrischen Einrichtungen, wie der Antriebe zum Verdrehen der Rotorblätter, kann ausschließlich über eine elektrische Drehverbindung, wie Schleifringe, an der Rotorwelle erfolgen, wobei eine Notstromversorgung außerhalb der Nabe, z.B. in der Gondel oder im Turm der Windkraftanlage, beispielsweise bei kurzen Netzunterbrechungen, die kontinuierliche Versorgung der Verstellantriebe gewährleistet und die Anlage immer geregelt abgestellt werden kann. Sollte allerdings z.B. bei Ausfall der Notstromversorgung, des Schleifringes, irgend einer Verbindungsleitung oder des Antriebes eine Notabschaltung erforderlich sein, sorgt das Bremsmoment der Rotorbremse in Verbindung mit der Massenträgheit der Rotorblätter für ein rasches und zuverlässiges Drehen der Rotorblätter in die Segelstellung und somit eine sichere Abschaltung der Anlage.

Da in der sich drehenden Rotornabe keine redundante Notstromversorgung mehr erforderlich ist, sondern diese außerhalb der Nabe angeordnet sein kann, welche Notstromversorgung für die Steuerung der Anlage ohnedies erforderlich ist, ergeben sich letztlich auch geringere Anlage bzw. Wartungskosten.

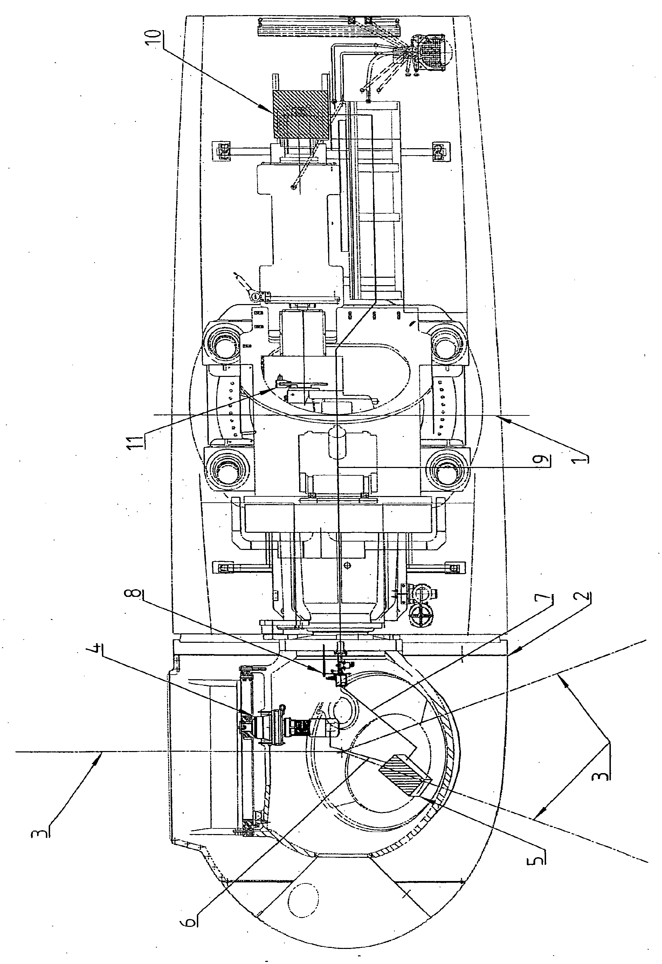

Weitere Merkmale und Vorteile der Erfindung ergeben sich aus der nachfolgenden Beschreibung eines Ausführungsbeispiels der Erfindung unter Bezugnahme auf die beiliegende Zeichnung.

In der Zeichnung ist schematisch eine Gondel 1 einer Windkraftanlage dargestellt, an der eine Nabe 2 drehbar gelagert ist. An der Nabe 2 sind durch ihre Drehachsen symbolisch dargestellte Rotorblätter 3 drehbar gelagert. Zum Verdrehen der Rotorblätter 3 ist jeweils ein Antrieb bestehend aus Motor 4 und Frequenzumrichter 5 je Rotorblatt 3 vorgesehen. Jeder Motor 4 ist mit einer Sperre ausgestattet, die im aktivierten Zustand ein Verdrehen der Rotorblätter 3 in die Betriebsstellung verhindert, aber ein kontinuierliches oder diskontinuierliches Verdrehen der Rotorblätter 3 in die Segelstellung zulässt. Im nicht aktivierten Zustand ist die Sperre inaktiv, d.h. ein Verdrehen der Rotorblätter 3 in alle Richtungen ist möglich. Die Sperre kann z. B. wie in der WO 99/23384 A1 beschrieben aufgebaut sein und funktionieren. Die Sperre kann aber auch so ausgelegt sein, dass sie lediglich die Rotorblätter 3 in der Segelstellung fängt und verhindert, dass sie sich wieder in die Betriebsstellung drehen.

Jeder Frequenzumrichter 5 ist über eine Leitung 6 mit einem Motor 4 verbunden. Die Stromversorgung des Frequenzumrichters 5 erfolgt über eine Verbindungsleitung 7, die an einen Schleifring 8 an der Rotorwelle angeschlossen ist. An den Schleifring 8 ist gondelseitig über eine weitere Verbindungsleitung 9 eine Notstromversorgung 10, z. B. mit einer Batterie bzw. einem Akkumulator, angeschlossen. Schließlich ist noch eine Rotorbremse 11 vorgesehen, die zum Abbremsen und zum Festhalten des Rotors bzw. der Rotornabe 2 dient.

Alle übrigen Teile der Windkraftanlage können wie aus dem Stand der Technik an sich bekannt ausgeführt sein.

Die Steuerung der Anlage und die Sperre am Motor 4 sind so ausgelegt, dass bei einer Unterbrechung der Stromversorgung, z. B. durch einen Ausfall des Motors 4, des Schleifringes 8 oder einen Bruch der Leitungen 6, 7, 9 oder einem Defekt im Frequenzumrichter 5, welche eine Notabschaltung der Anlage mit einem möglichst raschen Abbremsen des Rotors erforderlich macht, die Rotorbremse 11 sowie die Sperre am Antrieb 4 aktiviert werden. Dadurch wird der Rotor von der Rotorbremse 11 gebremst und gleichzeitig verhindert die Sperre ein Verdrehen der Rotorblätter 3 in die Betriebsstellung. Durch die Massenträgheit der Rotorblätter 3 und die Lage des Massenschwerpunktes außerhalb ihrer Drehachse werden diese durch das Bremsmoment der Rotorbremse 11 in die Segelstellung gedreht, wobei Windkräfte sowie die Schwerkraft dieses Verdrehen der Rotorblätter 3 in die Segelstellung wenigstens zeitweise bzw. intervallweise unterstützen. Dabei ist es durch das Bremsmoment der Rotorbremse 11 nicht erforderlich zusätzliche Maßnahmen, wie ein Notstromversorgung der Antriebe 4, 5 oder eine große Pfeilung der Rotorblätter 3 vorzusehen, da durch die Rotorbremse 11 ausreichend hohe Drehmomente zum raschen Drehen der Rotorblätter 3 in die Segelstellung zur Verfügung gestellt werden. Gleichzeitig ist es durch die Notstromversorgung 10 in der Gondel 1 möglich, die Antriebe 4 zum geregelten Abschalten der Anlage bei Bedarf, z.B. bei einer Störung der elektrischen Verbindung zwischen Anlage und dem Netz, in welches sie Strom einspeist, mit Notstrom zu versorgen, soferne eine funktionierende Strom-/Steuerungsverbindung zwischen Anlagensteuerung, Frequenzumrichter 5 sowie Motor 4 besteht.

Obwohl die Rotorbremse 11 als leistungsstärkere Bremse ausgelegt sein kann, kann diese bei der Erfindung auch nur als Not- und Wartungsbremse dimensioniert sein, denn die Rotorbremse 11 muss nur im Notfall zum Einsatz kommen, das heißt bei Ausfall einer der genannten Komponenten und sofern die Rotorblätter 3 in Verbindung mit der Sperre nicht durch die Pfeilung bzw. einen außerhalb der Drehachse der Rotorblätter 3 liegenden Massenschwerpunkt der Rotorblätter 3 allein in die Segelstellung gehen und wenn der Rotor eine überkritische Drehzahl erreicht.

## Patentansprüche

1. Vorrichtung zum Verstellen von an einer Rotornabe (2) einer Windkraftanlage drehbar gelagerten Rotorblättern (3), mit elektrischen Einrichtungen in der Rotornabe (2), wie einem Antrieb (4, 5) zum Verdrehen der Rotorblätter (3), mit einer mit den Rotorblättern (3) verbundenen Sperre, die bei Ausfall der Leistungsversorgung des Antriebes (4, 5) oder des Antriebes (4, 5) selbst aktivierbar ist, und welche im aktivierten Zustand ein Verdrehen der Rotorblätter (3) in die Betriebsstellung verhindert, mit einer Rotorbremse (11) und mit einer Notstromversorgung (10), **dadurch gekennzeichnet, dass** die Notstromversorgung (10) der in der Rotornabe (2) angeordneten elektrischen Einrichtungen (4, 5) außerhalb der Rotornabe (2), z.B. in einer Gondel (1) oder an einem Mast der Windkraftanlage, angeordnet und über eine elektrische Drehverbindung, z. B. einen Schleifring (8), mit den elektrischen Einrichtungen (4, 5) verbunden ist.

2. Vorrichtung nach Anspruch 1, **dadurch gekennzeichnet, dass** der Massenschwerpunkt der Rotorblätter (3) außerhalb ihrer Drehachse liegt.

3. Vorrichtung nach Anspruch 1 oder 2, **dadurch gekennzeichnet, dass** die Längsachse der Rotorblätter (3) zur Drehachse der Rotorblätter (3) geneigt ist.

4. Vorrichtung nach einem der Ansprüche 1 bis 3, **dadurch gekennzeichnet, dass** die Notstromversorgung (10) eine, z. B. in einer Gondel (1) oder an einem Mast der Windkraftanlage angeordnete, Batterie oder dergleichen ist, die über eine elektrische Drehverbindung, z. B. einen Schleifring (8), mit den elektrischen Einrichtungen (4, 5) verbunden ist.

5. Vorrichtung nach einem der Ansprüche 1 bis 4, **dadurch gekennzeichnet, dass** die Sperre ein kontinuierliches oder diskontinuierliches Verdrehen der Rotorblätter (3) in die Segelstellung zulässt.
